# EUROPÄISCHE PATENTSCHRIFT

(11) **EP 0 870 648 B1**
(45) Veröffentlichungstag und Bekanntmachung des Hinweises auf die Patenterteilung: **03.09.2003**
(21) Anmeldenummer: 98104485.2
(22) Anmeldetag: 12.03.1998
(51) Int. Cl.: B60R 16/02, B60R 16/04

(54) **Datenbussystem für Kraftfahrzeuge**
Data bus system for motor vehicles
Système de bus de données pour des véhicules automobiles

(30) Priorität: 10.04.1997 DE 19714937
(43) Veröffentlichungstag der Anmeldung: 14.10.1998
(73) Patentinhaber: Bayerische Motoren Werke Aktiengesellschaft, 80788 München (DE)
(72) Erfinder: Neudecker, Norbert, 84169 Altfraunhofen (DE)

(56) Entgegenhaltungen:
- EP-A- 0 443 465
- DE-A- 19 515 194
- US-A- 5 554 978

## Beschreibung

Die Erfindung betrifft ein Datenbussystem für Kraftfahrzeuge nach dem Oberbegriff des Patentanspruchs 1.

Ein derartiges Datenbussystem ist beispielsweise durch den CAN, Controller Area Network, für die Datenkommunikation insbesondere von Steuergeräten in Kraftfahrzeugen bekannt. Das Konzept für die Datenkommunikation im Kraftfahrzeug mittels eines CAN, die Funktion des CAN sowie eine mögliche Architektur eines CAN-Bausteins sind beispielsweise durch die Bosch-Prospekte "Das optimierte Bussystem für die serielle Datenübertragung im Kraftfahrzeug", "Funktionelle Beschreibung" und "Architektur des CAN-Bausteins AN 82526" aus dem Jahre 1987 bekannt. Dieses bekannte Datenbussystem ist linear aufgebaut. An einem Datenbus ist eine Mehrzahl von elektronischen Busteilnehmern, insbesondere Steuergeräte eines Kraftfahrzeuges, angeschlossen. Diese Busteilnehmer können zusätzlich zu dem Anschluß an den Datenbus weitere Ein- und Ausgänge, z. B. zum Anschließen von Sensoren und Aktuatoren oder zum Anschluß der Stromversorgung, aufweisen. Dieses bekannte Datenbussystem arbeitet nach dem Multi-Master-Prinzip, d. h. alle Busteilnehmer sind gleichberechtigt. Wenn der Datenbus frei ist, kann jeder Busteilnehmer beginnen, sein Datentelegramm zu übertragen. Das Telegramm eines sendenden Busteilnehmers wird von allen Busteilnehmern empfangen und bestätigt, jedoch nur von den Busteilnehmern ausgewertet, die Daten dieses Telegramms benötigen.

Die US-A-5 554 978 zeigt ein Datenbussystem für Kraftfahrzeuge mit einem Hauptbusteilnehmer und mehreren abhängigen Busteilnehmern gemäß dem Oberbegriff des Anspruchs 1. Die Busteilnehmer sind zur Stromversorgung mit der Kraftfahrzeugbatterie verbunden. Jeder Busteilnehmer weist eine Auswerteschaltung auf. Über die sogenannten "Condition Changing Means" können einige Elemente eines Busteilnehmers abgeschaltet werden.

Es sind jedoch auch andere Datenbussysteme in Kraftfahrzeugen bekannt.

Üblicherweise weisen die Busteilnehmer eines Datenbussystems in Kraftfahrzeugen eine Stromversorgung auf, die entweder bei ausgeschalteter Zündung abgeschaltet und nur durch das Einschalten der Zündung wieder eingeschaltet wird (Stromversorgung über die sog. "Klemme 15") oder durch eine untrennbare Verbindung mit der Kraftfahrzeugbatterie auch bei ausgeschalteter Zündung am Stromversorgungsanschluß des Busteilnehmers anliegt (Stromversorgung über die sog. "Klemme 30"). Bei einer Stromversorgung nach der ersten Alternative ist ein gegebenenfalls notwendiger Datenaustausch zwischen den Busteilnehmern bei ausgeschalteter Zündung nicht möglich, während bei einer Stromversorgung nach der zweiten Alternative ein unerwünscht hoher Ruhestromverbrauch auftritt.

Es ist Aufgabe der Erfindung, ein Datenbussystem zu schaffen, mit dem der Ruhestrom bei ausgeschalteter Zündung trotz Ermöglichung notwendiger Funktionen weitgehend reduziert wird.

Diese Aufgabe wird durch die Merkmale des Patentanspruchs 1 gelöst.

Die Gegenstände der Unteransprüche sind vorteilhafte Weiterbildungen der Erfindung.

Der Grundgedanke der Erfindung liegt in der Schaffung eines selektiven Weckzustandes bei ausgeschalteter Zündung, durch den ein zeitweiser Datenaustausch zwischen ausgewählten Busteilnehmern, die jeweils bestimmten notwendigen Funktionen zugeordnet sind, ermöglicht wird. Erfindungsgemäß wird demnach bei ausgeschalteter Zündung grundsätzlich die Stromversorgung von den Busteilnehmern abgeschaltet und nur bei zeitweise notwendigem Datenaustausch ausgewählter Busteilnehmer kurzzeitig eingeschaltet bzw. mit Spannung versorgt. Hierzu wird zumindest ein Busteilnehmer als Hauptbusteilnehmer definiert, um den jeweiligen Weckzustand zu steuern, obwohl die Busteilnehmer grundsätzlich gleichberechtigt sein können. Darüber hinaus müssen die Busteilnehmer zur Realisierung des selektiven Weckzustandes eine Erweiterung in Form einer Auswerteschaltung aufweisen, die bei ausgeschaltetem Busteilnehmer noch mit Strom versorgt wird. Da jedoch nur die Auswerteschaltungen mit Strom versorgt werden müssen, wird durch das grundsätzliche Abschalten der Stromversorgung von den Busteilnehmern der Ruhestromverbrauch weitgehend reduziert. Die Auswerteschaltung kann dabei hardwaremäßig im Busteilnehmer integriert oder extern am Busteilnehmer angeschlossen werden. Weiterhin kann sich die Auswerteschaltung eines Hauptbusteilnehmers von den Auswerteschaltungen der übrigen Busteilnehmer unterscheiden. Auch können alle Busteilnehmer Hauptbusteilnehmer in dem Sinne sein, daß sie einen selektiven Weckzustand steuern können. Ein Hauptbusteilnehmer kann entweder durch einen externen Weckeingang (Interrupteingang) geweckt werden oder sich selbst wecken, z.B. durch eine mit der Auswerteschaltung verbundene Echtzeituhr.

Als Weiterbildung der Erfindung weist der Hauptbusteilnehmer zur Aktivierung eines notwendigen Datenaustausches eine Schaltung auf, die ein Auswahltelegramm auf den Datenbus ausgibt, durch das jeder zeitweise notwendige Datenaustausch zwischen ausgewählten Busteilnehmern vorgebbar ist. In einem Speicher des Hauptbusteilnehmers, z. B. in dessen Mikroprozessor oder in dessen Auswerteschaltung, wird abgespeichert, wann und ggf. wie lange ein Datenaustausch notwendig ist und welche Busteilnehmer für den jeweiligen notwendigen Datenaustausch auszuwählen sind. Dabei kann auch der Hauptbusteilnehmer ausgewählter Busteilnehmer sein.

In einer weiteren vorteilhaften Ausgestaltung der Erfindung empfangen die Auswerteschaltungen aller Busteilnehmer das Auswahltelegramm, um festzustellen, ob der ihnen jeweils zugeordnete Busteilnehmer ausgewählt ist, und schalten nur in diesem Fall die Stromversorgung ein.

Das Abschalten erfolgt beispielsweise durch den Hauptbusteilnehmer, insbesondere durch das Abschalten aller Bustelegramme oder durch Ausgabe eines dominanten Bussignals, z. B. durch Überschreiben einer bestehenden Übertragung mit einem langem High-Pegel. Bei bekannten Bussystemen (z. B. CAN) ist den Busteilnehmern bekannt, daß es sich bei der zweiten Variante üblicherweise um eine Bus-Protokoll-Verletzung handelt, wonach sie ihre Übertragung beenden.

Ergänzend wird darauf hingewiesen, daß nicht nur die Auswerteschaltungen, sondern auch die steuerbaren Schalter zum Ein- und Ausschalten der Stromversorgung entweder in dem jeweiligen Busteilnehmer integriert oder an dem jeweiligen Busteilnehmer extern angeschlossen sein können. Der Anschluß des steuerbaren Schalters und der Auswerteschaltung außerhalb des Busteilnehmers hat den Vorteil, daß bereits vorhandene Datenbussysteme ohne Änderung der Busteilnehmer aufgerüstet werden können. Grundsätzlich ist jedoch bei dem Aufbau neuer Datenbussysteme eine Integration der Auswerteschaltung und des steuerbaren Schalters im Gehäuse der Busteilnehmer vorzuziehen.

In der Zeichnung ist ein Ausführungsbeispiel der Erfindung dargestellt. Es zeigt
- Fig. 1: den Aufbau eines erfindungsgemäßen Datenbussystems und
- Fig. 2: den Aufbau einer Auswerteschaltung eines Busteilnehmers, der nicht Hauptbusteilnehmer ist.

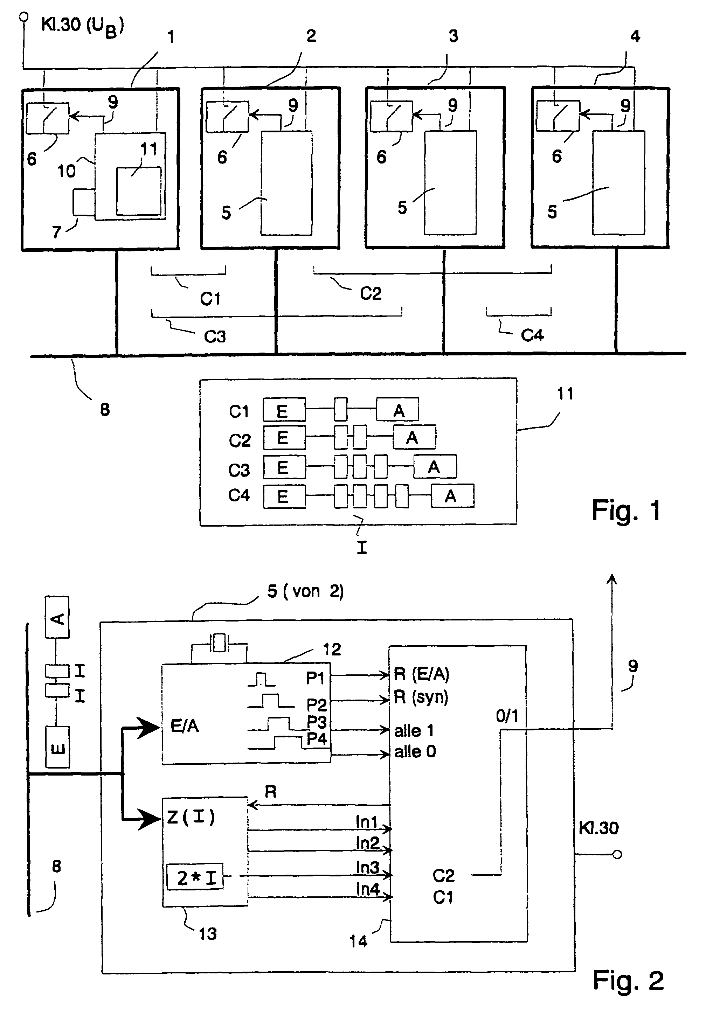

In Fig. 1 sind die Busteilnehmer 1, 2, 3 und 4 am Datenbus 8 angeschlossen. Der Busteilnehmer 1 ist im vorliegenden Beispiel als Hauptbusteilnehmer definiert. Die Busteilnehmer 2, 3 und 4 weisen eine Auswerteschaltung 5 auf, die sich von der Auswerteschaltung 10 des Hauptbusteilnehmers 1 unterscheiden. Die Auswerteschaltung 10 des Hauptbusteilnehmers 1 weist über den Aufbau der Auswerteschaltungen 5 der übrigen Busteilnehmer 2, 3 und 4 hinaus eine Schaltung 11 auf, mit der ein Auswahltelegramm (C1 bis C4) auf den Bus ausgegeben werden kann. Zur Zeitsteuerung des selektiven Weckzustandes weist die Auswerteschaltung 10 des Hauptbusteilnehmers 1 eine Echtzeituhr 7 auf. Diese weckt wiederum zuerst den Hauptbusteilnehmer 1 bzw. dessen Mikroprozessor (µP) (hier nicht dargestellt). In einem Speicher des Hauptbusteilnehmers (µP) ist abgespeichert, wann und wie lange ein zeitweise notwendiger Datenaustausch vorzunehmen ist, und, welche Busteilnehmer für den jeweiligen Datenaustausch ausgewählt werden müssen. Beispielsweise soll zeitweise ein Datenaustausch C1 zwischen dem Hauptbusteilnehmer 1 und dem Busteilnehmer 2, ein Datenaustausch C2 zwischen dem Busteilnehmer 2 und dem Busteilnehmer 4, ein Datenaustausch C3 zwischen dem Hauptbusteilnehmer 1 und dem Busteilnehmer 3 und ein Datenaustausch C4 zwischen dem Busteilnehmer 3 und dem Busteilnehmer 4 vorgenommen werden. Im Speicher des Hauptbusteilnehmers 1 ist für jeden notwendigen Datenaustausch C1 bis C4 ein entsprechendes Auswahltelegramm abgespeichert, das zur Aktivierung des jeweils notwendigen Datenaustausches vom Hauptbusteilnehmer 1 auf den Datenbus 8 ausgegeben wird.

Ergänzend wird darauf hingewiesen, daß die Auswerteschaltung 10 alternativ auch einen externen Interrupteingang aufweisen kann (hier nicht dargestellt), durch den der Schalter 6 des Hauptbusteilnehmers 1 ebenfalls geschlossen werden kann. Das Abschalten erfolgt wiederum vom durch das Schließen des Schalters 6 geweckten Hauptbusteilnehmer 1 selbst. Darüber hinaus können auch mehrere oder alle Busteilnehmer 1, 2, 3, 4 mit einer Auswerteschaltung 10 ausgestattet sein, die gegenüber der Auswerteschaltung 5 funktionell erweitert ist, wenn mehrere oder alle Busteilnehmer Hauptbusteilnehmer sein bzw. einen selektiven Weckzustand steuern sollen.

Insbesondere die Auswerteschaltung 10 kann beispielsweise auch einen programmierbaren Speicher enthalten, worin abgelegt werden kann, auf welche Anzahl der Impulse I die jeweilige Auswerteschaltung reagieren soll.

Die Auswerteschaltungen 5 und 10 sind zur Stromversorgung mit der Klemme 30 des Fahrzeuges verbunden, die für die Stromversorgung mit der Batteriespannung U_{B} durch direkte Verbindung mit der Batterie üblicherweise vorgesehen ist.

Erkennen die Auswerteschaltungen 5 und/oder 10 der Busteilnehmer 1, 2, 3 und/oder 4 insbesondere aufgrund des erhaltenen Auswahltelegramms, daß sie für einen notwendigen Datenaustausch ausgewählt wurden, steuert jede dem jeweils ausgewählten Busteilnehmer zugeordnete Auswerteschaltung über den Ausgang 9 einen steuerbaren Schalter 6 an, um den gesamten Busteilnehmer mit der Klemme 30 zur Stromversorgung mit der Batteriespannung U_{B} zu verbinden. Ist die Auswerteschaltung 5 bzw. 10 in den Busteilnehmern 1, 2, 3 und 4 wie im dargestellten Beispiel integriert, entspricht die Stromversorgung des Busteilnehmers über den steuerbaren Schalter 6 der Stromversorgung des Busteilnehmers mit Ausnahme der Auswerteschaltung, da diese ohnehin ständig versorgt wird.

Die Dauer des Schließens des steuerbaren Schalters 6 im selektiven Weckzustand wird beispielsweise ebenfalls über den Hauptbusteilnehmer 1 geregelt. Es ist jedoch auch möglich, daß die Dauer des Schließens des steuerbaren Schalters 6 nach Aktivierung des notwendigen Datenaustauschs in den jeweils ausgewählten Busteilnehmern selbst vorgegeben wird.

In Fig. 2 ist am Beispiel des Datenaustausches C2 zwischen den Busteilnehmern 2 und 4 der Aufbau und die Funktionsweise einer Auswerteschaltung 5 zur Erkennung, ob der ihr zugeordnete Busteilnehmer für den selektiven Datenaustausch ausgewählter Busteilnehmer ist, dargestellt.

In Fig. 2 sind die mit Fig. 1 identischen Zeichnungselemente mit den gleichen Bezugszeichen versehen. In Fig. 2 soll die Auswerteschaltung 5 die Auswerteschaltung des Busteilnehmers 2 sein.

Das beispielsweise dem Datenaustausch C2 zugeordnete Auswahltelegramm beginnt mit einem langen ersten Impuls E, auf den zwei kurze Codeimpulse I folgen, und endet mit einem langen letzten Impuls A. Während sämtliche Auswahltelegramme für jeden Datenaustausch C1 bis C4 mit einem langen ersten Impuls E beginnen und mit einem langen letzten Impuls A enden, entspricht die Anzahl der kurzen Codeimpulse I zwischen dem Impuls E und dem Impuls A dem gerade notwendigen Datenaustausch.

Erkennt also der Hauptbusteilnehmer 1, daß als nächstes der Datenaustausch C2 zu aktivieren ist, wird aus dem Speicher seines Mikroprozessors (µP) das Auswahltelegramm für den Datenaustausch C2 ausgelesen und über die Schaltung 11, die im vorliegenden Beispiel in der Auswerteeinheit 10 integriert ist, auf den Datenbus 8 ausgegeben. Dieses auf den Datenbus 8 ausgegebene Auswahltelegramm wird von den Auswerteschaltungen 5 und 10 der Busteilnehmer 1 bis 4 empfangen und ausgewertet. Hierzu ist das Auswahltelegramm Eingangssignal sowohl eines Oszillators 12 als auch eines Zählers 13 in der Auswerteschaltung 5 (oder 10). Der Oszillator 12 filtert die kurzen Codeimpulse I aus. Durch den langen ersten Impuls E wird jeweils ein kurzer Impuls P1 vom Oszillator 12 an den Eingang R(E/A) der Schaltersteuerung 14 ausgegeben. Der Impuls P1 veranlaßt die Schaltersteuerung 14 zur Ausgabe eines Resets R, der an den Zähler 13 weitergegeben wird.

Der Zähler 13 beginnt auf den Reset R hin, der durch den langen ersten Impuls E ausgegeben wird, die auf diesen Reset R hin folgenden kurzen Codeimpulse I zu zählen, bis der lange letzte Impuls A den Zählvorgang beendet.

Wird beispielsweise, wie im vorliegenden Fall beim Datenaustausch C2, die Folge von zwei kurzen Codeimpulsen I erfaßt, gibt der Zähler 13 diesen Zählerstand an die Eingänge In1 bis In4 der Schaltersteuerung 14 aus. Durch den entsprechenden Zählerstand an diesen Eingängen der Schaltersteuerung 14 wird der Datenaustausch C2 erkannt und daraufhin der Ausgang 9 zum steuerbaren Schalter 6 derart angesteuert, daß der steuerbare Schalter 6 geschlossen wird.

Das Abschalten der aktiven Busteilnehmer erfolgt entweder automatisch nach einem Zeitablauf (Timeout) oder über den Hauptbusteilnehmer 1, z.B. durch die Ausgabe eines langen Impulses E, der ebenfalls einen Reset der Zähler ausführt und somit auch den Ausgang 9 zurücksetzt, wodurch die Schalter 6 wieder geöffnet werden.

Da in Fig. 2 als Beispiel die Auswerteschaltung 5 des Busteilnehmers 2 dargestellt ist, der beim Datenaustausch C1 und C2 ausgewählter Busteilnehmer ist, wird bei den sich aus der Anzahl der kurzen Codeimpulse I der Auswahltelegramme für C1 und C2 ergebenden Zählerständen (C1: ein Codeimpuls I, C2: zwei Codeimpulse I) an den Eingängen In1 bis In4 der Schaltersteuerung 14 der Ausgang 9 zum Schließen des steuerbaren Schalters 6 aktiviert. Würde beispielsweise der Zähler 13 bei einem angeforderten Datenaustausch C4 vier kurze Codeimpulse I erkennen, würde dies nicht zum Aktivieren des Ausgangs 9 führen, wonach der steuerbare Schalter 6 geöffnet bleiben würde.

Die Auswerteschaltung 5 nach Fig. 2 ist ausschließlich durch Hardwarebausteine realisiert: Beim vorliegenden Beispiel wird die Auswerteschaltung vorzugsweise durch den Oszillator 12, der ein MC14060-Baustein sein kann, durch einen Zähler 13, der ein MC74HC393-Baustein sein kann, und durch eine Schaltersteuerung 14, die ein ispGAL22V10C-Baustein sein kann, realisiert. Die Auswerteschaltung kann auf einem Chip integriert werden, vorzugsweise in CMOS Technologie, da diese unter dem Gesichtspunkt der Stromersparnis am geeignetsten ist. Des weiteren kann auf dem Chip ein Bus- (z.B. CAN-) Transceiver integriert sein, da dieser ebenfalls ständig mit Strom versorgt werden muß.

Weiterhin kann nach Aktivierung eines Datenaustausches der Hauptbusteilnehmer 1 den Datenaustausch zwischen anderen ausgewählten Busteilnehmern überwachen, um im Fehlerfall ggf. korrigierend eingreifen zu können. Eine derartige Überwachungsfunktion durch den Hauptbusteilnehmer 1 kann ebenfalls selektiv vorgenommen werden, wenn z. B. ein bestimmter Datenaustausch, z. B. C4, für eine sicherheitskritische Funktion zuständig ist.

Insbesondere bei einer Fehlererkennung können die Ausgänge P2, P3 oder P4 des Oszillators 12 aktiviert werden, um vorgegebene Fehlerbehandlungsfunktionen auszulösen. Beispielsweise kann durch den Hauptbusteilnehmer 1 festgestellt werden, daß die Auswahltelegramme asynchron von den Busteilnehmern 2 bis 4 ausgewertet werden, da beispielsweise ein langer letzter Impuls A fälschlicherweise als ein langer erster Impuls E erkannt wurde. In diesem Fall kann beispielsweise durch den Hauptbusteilnehmer 1 ein bezüglich der Impulse E oder A längerer Impuls (z.B. Faktor 2) ausgegeben werden, wodurch daraufhin am Oszillator 12 der Ausgang P2 bzw. an der Schaltersteuerung 14 der Eingang R(syn) aktiviert werden. Hierdurch wird ein synchronisierender Reset R an die Zähler 13 sämtlicher ausgewählter Busteilnehmer ausgegeben. Somit findet wieder eine Synchronisierung der Busteilnehmer auf den langen ersten Impuls E statt.

Weiterhin ist durch den Hauptbusteilnehmer 1 die Erkennung eines Fehlers möglich, bei dem das Einschalten aller Busteilnehmer erforderlich wäre, woraufhin über ein weiteres Fehlersignal der Ausgang P3 des Oszillators 12 bzw. der Eingang "alle 1" der Schaltersteuerung 14 aktiviert werden könnten, wodurch die Ausgänge 9 aller Busteilnehmer zum Einschalten der steuerbaren Schalter 6 aktiviert werden.

Erkennt der Hauptbusteilnehmer 1 einen Fehler, bei dessen Vorliegen das Ausschalten aller Busteilnehmer vorteilhaft wäre, wird über ein weiteres Signal über den Datenbus 8 der Ausgang P4 des Oszillators 12 aktiviert, um über den Eingang "alle 0" der Schaltersteuerung 14 die Ausgänge 9 aller Busteilnehmer 1 bis 4 zu deaktivieren, so daß keiner der steuerbaren Schalter 6 geschlossen wird.

Sind alle steuerbaren Schalter 6 geöffnet, entspricht dies einem Grundzustand bei ausgeschalteter Zündung, wodurch der Ruhestromverbrauch im Kraftfahrzeug minimiert wird. Der Ruhestromverbrauch ist nur in einem selektiven Weckzustand leicht angehoben, wenn die ausgewählten Busteilnehmer für einen notwendigen Datenaustausch kurzzeitig ein- und dann wieder ausgeschaltet werden. Somit werden bei ausgeschalteter Zündung die noch notwendigen Funktionen eines Kraftfahrzeuges sichergestellt.

## Patentansprüche

1. Datenbussystem für Kraftfahrzeuge mit einer Mehrzahl von elektronischen Busteilnehmern (1; 2; 3; 4), die jeweils einen Eingang aufweisen, der zur Stromversorgung der Busteilnehmer (1; 2; 3; 4) mit der Kraftfahrzeugbatterie verbunden ist, wobei zur Steuerung eines Weckzustandes zumindest einer der Busteilnehmer (1; 2; 3; 4) als Hauptbusteilnehmer (1) definiert wird und jeder Busteilnehmer (1,2,3,4) mit einer Auswerteschaltung (5; 10, 11, 7) versehen ist **dadurch gekennzeichnet, daß** jeder Busteilnehmer (1,2,3,4) mit einem von der Auswerteschaltung (5; 10, 11, 7) steuerbaren Schalter (6) versehen ist, daß in einem Grundzustand die Stromversorgung jedes Busteilnehmers (1,2,3,4) mit Ausnahme der ihm zugeordneten Auswerteschaltung (5; 10, 11, 7) bei ausgeschalteter Zündung durch die Offenstellung des Schalters (6) abgeschaltet ist, und daß in einem selektiven Weckzustand bei zeitweise notwendigem Datenaustausch (C1; C2; C3; C4) zwischen ausgewählten Busteilnehmern (1, 2; 2, 4; 1, 3; 3, 4) der steuerbare Schalter (6) jedes ausgewählten Busteilnehmers über dessen Auswerteschaltung (5;10, 11, 7) geschlossen wird.

2. Datenbussystem nach Patentanspruch 1, **dadurch gekennzeichnet, daß** zur Steuerung eines Weckzustandes zuerst der steuerbare Schalter (6) des Hauptbusteilnehmers (1) durch das Steuersignal einer externen oder internen Zusatzschaltung (7) eingeschaltet wird.

3. Datenbussystem nach Patentanspruch 1 oder 2, **dadurch gekennzeichnet, daß** der Hauptbusteilnehmer (1) zur Steuerung eines Weckzustandes eine Schaltung (11), durch die jeder zeitweise notwendige Datenaustausch (C1; C2; C3; C4) zwischen ausgewählten Busteilnehmern (1, 2; 2, 4; 1, 3; 3, 4) in Form eines auf den Datenbus auszugebendes Auswahltelegramms vorgebbar ist, und einen Speicher, in dem die Auswahltelegramme gespeichert sind, aufweist.

4. Datenbussystem nach Patentanspruch 3, **dadurch gekennzeichnet, daß** zur Aktivierung eines bestimmten notwendigen Datenaustausches (C2) zwischen ausgewählten Busteilnehmern (2, 4) der Hauptbusteilnehmer (1) das entsprechende Auswahltelegramm (E-I-I-A) auf den Datenbus (8) ausgibt, das von den Auswerteschaltungen aller oder zumindest der übrigen Busteilnehmer empfangen und ausgewertet wird, wonach nur die ausgewählten Busteilnehmer (2,4) ihren steuerbaren Schalter (6) schließen.

## Claims

1. A data bus system for motor vehicles comprising a number of electronic bus subscribers (1;2;3;4) each having an input for providing the subscribers (1;2;3;4) with power by connecting to the vehicle battery, at least one subscriber (1;2;3;4) being defined as the main subscriber (1) in order to obtain a calling state and each subscriber (1,2,3,4) being provided with an evaluating circuit (5; 10, 11, 7), **characterised in that** each subscriber (1,2,3,4) is provided with a switch controllable by the evaluating circuit (5; 10, 11, 7), in a ground level state the power supply to each subscriber (1,2,3,4) with the exception of the evaluating circuit (5; 10, 11, 7) allocated to him is switched off by opening the switch (6) when the ignition is off, and in a selective calling state during an intermittently required data exchange (C1; C2; C3; C4) between selected bus subscribers (1, 2; 2, 4; 1, 3; 3, 4) the controllable switch (6) of each selected subscriber is closed via the subscriber's evaluating circuit (5; 10, 11, 7).

2. A data bus system according to claim 1, **characterised in that** in order to obtain a calling state, the controllable switch (6) of the main subscriber (1) is first switched on by the control signal from an external or internal additional circuit (7).

3. A data bus system according to claim 1 or 2, **characterised in that** in order to obtain an operating state the main subscriber (1) has a circuit (11) whereby each intermittently required data exchange (C1; C2; C3; C4) between selected bus subscribers (1, 2; 2, 4; 1, 2; 3, 4) is presetable in the form of a selection telegram for outputting on to the data bus, and also has a memory in which the selection telegrams are stored.

4. A data bus system according to claim 3, **characterised in that** in order to activate a particular required data exchange (C2) between selected bus subscribers (2, 4) the appropriate selection telegram (E-I-I-A) is output by the main bus subscriber (1) on to the data bus (8) and is received and stored by the evaluating circuits of all or at least of the remaining bus subscribers, after which only the selected subscribers (2, 4) close their controllable switches (6).

## Revendications

1. Système de bus de données pour véhicules automobiles présentant un grand nombre de participants de bus électroniques (1, 2, 3, 4), équipés chacun d'une entrée, reliée à la batterie du véhicule automobile afin d'assurer l'alimentation en courant des participants de bus (1, 2, 3, 4), pour lequel au moins un des participants de bus (1, 2, 3, 4) est défini comme étant le participant principal de bus (1) afin d'assurer le réglage d'un état d'activation et pour lequel chaque participant de bus (1, 2, 3, 4) est équipé d'un montage d'exploitation (5, 10, 11, 7),
**caractérisé en ce que**
chaque participant de bus (1, 2, 3, 4) est équipé d'un interrupteur (6) pouvant être commandé par le montage d'exploitation (5, 10, 11, 7), dans un état de base l'alimentation en courant de chaque participant de bus (1, 2, 3, 4) à l'exception du montage d'exploitation (5, 10, 11, 7) affecté au participant de bus est interrompue lors d'un allumage désactivé par l'ouverture de l'interrupteur (6), et dans un état d'activation sélectif, pour un échange de données temporel nécessaire (C1, C2, C3, C4) entre des participants de bus sélectionnés (1, 2, 2, 4, 1, 3, 3, 4) l'interrupteur réglable (6) de chaque participant de bus sélectionné est fermé via le montage d'exploitation (5, 10, 11, 7).

2. Système de bus de données selon la revendication 1,
**caractérisé en ce que**
pour assurer le réglage d'un état d'activation, l'interrupteur réglable (6) du participant principal de bus (1) est tout d'abord activé à l'aide du signal de contrôle d'un montage d'ajout (7) externe ou interne.

3. Système de bus de données selon la revendication 1 ou 2,
**caractérisé en ce que**
le participant principal de bus (1) possède pour assurer le réglage d'un état d'activation un montage (11) grâce auquel chaque échange de données temporel nécessaire (C1, C2, C3, C4) entre les participants de bus sélectionnés (1, 2, 2, 4, 1, 3, 3, 4) peut être préalablement défini sous forme de télégramme au choix émis sur le bus de données, et possède également une mémoire dans laquelle les télégrammes au choix sont enregistrés.

4. Système de bus de données selon la revendication 3,
**caractérisé en ce que**
pour assurer l'activation d'un échange de données temporel nécessaire (C2) entre les participants de bus sélectionnés (2, 4), le participant principal de bus (1) émet le télégramme au choix correspondant (E-I-I-A) sur le bus de données (8), reçu et activé par les montages d'exploitation de tous les participants de bus ou au moins des participants de bus courants, seuls les participants de bus sélectionnés (2, 4) fermant alors leur interrupteur réglable (6).
